# EUROPEAN PATENT APPLICATION

(11) **EP 4 360 779 A1**
(43) Date of publication of application: **01.05.2024**
(21) Application number: 23205918.8
(22) Date of filing: 25.10.2023
(51) Int. Cl.: B22F 5/00, B22F 10/28, B22F 10/38, B22F 10/40, B29C 64/40, B33Y 10/00, B33Y 80/00, B22F 7/08

(54) **HYBRID BEARING FORGED FLANGE**

(30) Priority: 25.10.2022 US 202263419200 P
(71) Applicant: RTX Corporation, Farmington, CT 06032 (US)
(72) Inventor: BINEK, Lawrence A., Farmington, 06032 (US); RAMSEY, Christopher D., Farmington, 06032 (US); SATOH, Gen, Farmington, 06032 (US); GARDELL, Benjamin G., Farmington, 06032 (US)
(74) Representative: Dehns

(57) **Abstract**

A method of additive manufacturing of a component(303) is provided. The method includes building up the component (303) to have a first uppermost layer (304) and a foundation (305) to have a second uppermost layer (306) below the first uppermost layer (304), evacuating powder (310) from around the component (303) and the foundation (305) to expose the second uppermost layer (306), disposing, on the second uppermost layer (306), a forged flange (320) having an upper surface (321) coplanar with the first uppermost layer (304), backfilling powder (310) about the component (303) and the forged flange (320), applying a thin additive manufacturing layer (330) to the upper surface (321) and completing a building up of the component (303) by building up on the thin additive manufacturing layer (330).

## Description

### CROSS-REFERENCE TO RELATED APPLICATIONS

This application claims the benefit of U.S. Provisional Application No. 63/419,200 filed October 25, 2022.

### TECHNICAL FIELD

The present disclosure relates generally to gas turbine engines and particularly to hybrid bearing forged flange.

### BACKGROUND

In a gas turbine engine, air is compressed in a compressor and compressor air is then mixed with fuel and combusted in a combustor to produce a high-temperture and high-pressure working fluid. This working fluid is directed into a turbine in which the working fluid is expanded to generate power. The generated power drives the rotation of a rotor within the turbine through aerodynamic interactions between the working fluid and turbine blades or airfoils. The rotor can be used to drive rotations of a propeller or to produce electricity in a generator.

Additively manufactured components are susceptible to a significant amount of distortion and residual stress, particularly following various secondary processes such as, for example, a heating process. To obtain shape accuracy, various techniques are employed to compensate for the dimensional change caused by the distortion that may occur during the secondary processes as well as during operations of additively manufactured components in gas turbine engines. Room for improvement of these various techniques remains.

Accordingly, a need exists for continued improvement in various techniques to compensate for dimensional changes caused by distortions that may occur during secondary processes as well as during operations of additively manufactured components in gas turbine engines.

### BRIEF DESCRIPTION

According to an aspect of the disclosure, a method of additive manufacturing of a component is provided. The method includes building up the component to have a first uppermost layer and a foundation to have a second uppermost layer below the first uppermost layer, evacuating powder from around the component and the foundation to expose the second uppermost layer, disposing, on the second uppermost layer, a forged flange having an upper surface coplanar with the first uppermost layer, backfilling powder about the component and the forged flange, applying a thin additive manufacturing layer to the upper surface and completing a building up of the component by building up on the thin additive manufacturing layer.

In accordance with additional or alternative embodiments, the component includes a bearing chamber of a gas turbine engine.

In accordance with additional or alternative embodiments, the forged flange includes metallic material having substantially different properties of thermal expansion from materials of the component and the thin layer.

In accordance with additional or alternative embodiments, the method further includes chamfering the second uppermost layer prior to the disposing of the forged flange thereon.

In accordance with additional or alternative embodiments, the disposing of the forged flange on the second uppermost layer includes mechanically attaching the forged flange to the second uppermost layer.

In accordance with additional or alternative embodiments, the thin additive manufacturing layer has a thickness which is less than thicknesses of each other layer of the component.

In accordance with additional or alternative embodiments, the thin additive manufacturing layer has a thickness of about 20 microns.

In accordance with additional or alternative embodiments, the completing of the building up of the component includes restarting the building up of the component, which includes building up a main body of the component and building up a peripheral body of the component on the thin additive manufacturing layer, and connecting the peripheral body to the main body.

According to an aspect of the disclosure, a method of additive manufacturing of a bearing chamber of a gas turbine engine is provided and includes building up a main body of the bearing chamber to have a first uppermost layer and a foundation to have a second uppermost layer below the first uppermost layer, evacuating powder from around the main body and the foundation to expose the second uppermost layer, disposing, on the second uppermost layer, a forged flange having an upper surface coplanar with the first uppermost layer, backfilling powder about the main body and the forged flange, applying a thin additive manufacturing layer to the upper surface and completing the bearing chamber by continuing to build up the main body, building up a peripheral body of the bearing chamber on the thin additive manufacturing layer and connecting the peripheral body to the main body.

In accordance with additional or alternative embodiments, the forged flange includes metallic material having substantially different properties of thermal expansion from materials of the main body and the peripheral body and the thin layer.

In accordance with additional or alternative embodiments, the method further includes chamfering the second uppermost layer prior to the disposing of the forged flange thereon.

In accordance with additional or alternative embodiments, the disposing of the forged flange on the second uppermost layer includes mechanically attaching the forged flange to the second uppermost layer.

In accordance with additional or alternative embodiments, the thin additive manufacturing layer has a thickness which is less than thicknesses of each other layer of the main body and the peripheral body.

In accordance with additional or alternative embodiments, the thin additive manufacturing layer has a thickness of about 20 microns.

According to an aspect of the discosure, an additively manufactured and hybridized component is provided and includes a main body built up of layers of additive manufacturing material, a forged flange formed of material having substantially different properties of thermal expansion from the additive manufacturing material, a thin layer of the additive manufacturing material applied to at least an uppermost surface of the forged flange and a peripheral body built up of layers of the additive manufacturing material from the thin layer of the additive manufacturing material to connect with the main body.

In accordance with additional or alternative embodiments, the thin layer of the additive manufacturing material has a thickness which is less than thicknesses of each of the layers of the main body and each of the layers of the peripheral body.

In accordance with additional or alternative embodiments, the thin layer has a thickness of about 20 microns.

In accordance with additional or alternative embodiments, the additively manufactured component includes a bearing chamber of a gas turbine engine.

In accordance with additional or alternative embodiments, the forged flange includes metallic material having the substantially different properties of thermal expansion from the additive manufacturing material.

In accordance with additional or alternative embodiments, a lower surface of the forged flange is substantially flat.

These and other advantages and features will become more apparent from the following description taken in conjunction with the drawings.

### BRIEF DESCRIPTION OF THE DRAWINGS

The following descriptions should not be considered limiting in any way. With reference to the accompanying drawings, like elements are numbered alike:
FIG. 1 is a partial cross-sectional view of a gas turbine engine;
FIG. 2 is a flow diagram illustrating a method of additive manufacturing of a component in accordance with embodiments; and
FIGS. 3A-3I are side views illustrating the method of FIG. 2 in accordance with embodiments.

These and other advantages and features will become more apparent from the following description taken in conjunction with the drawings.

### DETAILED DESCRIPTION

A detailed description of one or more embodiments of the disclosed apparatus and method are presented herein by way of exemplification and not limitation with reference to the Figures.

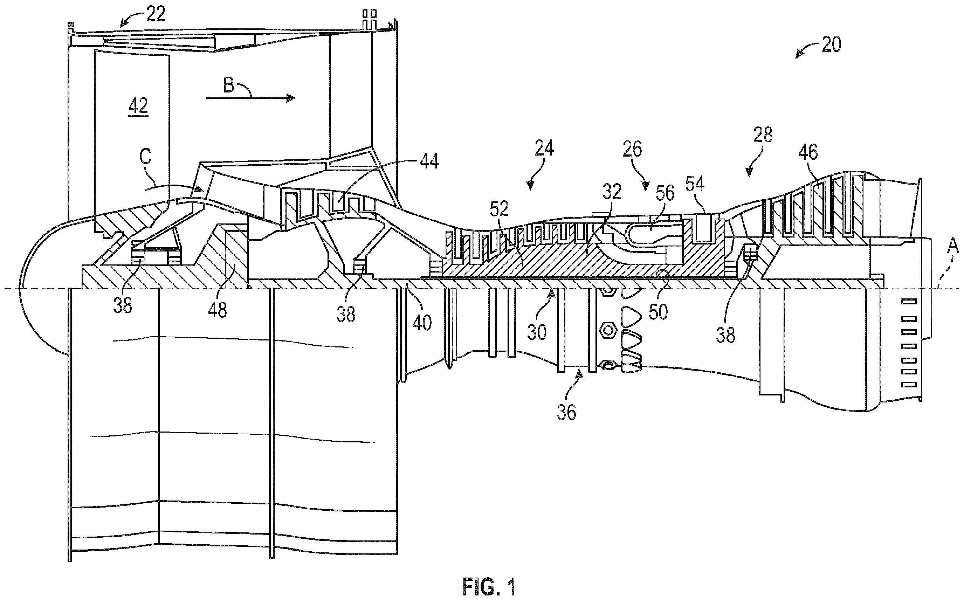

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 and then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary gas turbine engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in the gas turbine engine 20 between the high pressure compressor 52 and the high pressure turbine 54. The engine static structure 36 is arranged generally between the high pressure turbine 54 and the low pressure turbine 46. The engine static structure 36 further supports the bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 and then the high pressure compressor 52, is mixed and burned with fuel in the combustor 56 and is then expanded over the high pressure turbine 54 and the low pressure turbine 46. The high and low pressure turbines 54 and 46 rotationally drive the low speed spool 30 and the high speed spool 32, respectively, in response to the expansion. It will be appreciated that each of the positions of the fan section 22, compressor section 24, combustor section 26, turbine section 28, and fan drive gear system 48 may be varied. For example, geared architecture 48 may be located aft of the combustor section 26 or even aft of the turbine section 28, and the fan section 22 may be positioned forward or aft of the location of geared architecture 48.

Within the gas turbine engine 20, bearings are used to provide smooth relative rotation between the various shafts and non-rotating components and/or between two shafts which rotate at different speeds. An oil lubrication system can be provided that includes an oil pump, sometimes referred to as a main pump, and a network of conduits and nozzles to feed the bearings with oil. This oil is contained in bearing cavities, typically formed inside annular bearing chambers. In these bearing chambers, air and oil flows mix and generate a flow pattern about the engine central longitudinal axis A. The oil flow pattern generally operates as follows: oil particles coalesce along internal bearing chamber partitions and form a liquid partition film which contains air bubbles. Each bearing chamber can be attached to the correspodnign gas turbine engine 20 by a flange.

The flange used to attach a bearing chamber to a gas turbine engine is typically made of different materials than the bearing chamber itself so that the flange can withstand the loads applied thereto. This can lead to difficulties in manufacturing and operational use since at least the rates of thermal expansion of the flange and the materials of the bearing chamber differ.

As will be described below, a method of additive manufacturing of a component, such as a bearing chamber of a gas turbine engine, (i.e., the gas turbine engine 20 of FIG. 1) is provided. The method involves additive manufacturing processes that allow a forged flange to be attached to the component in a reliable manner and without causing undue thermal stress.

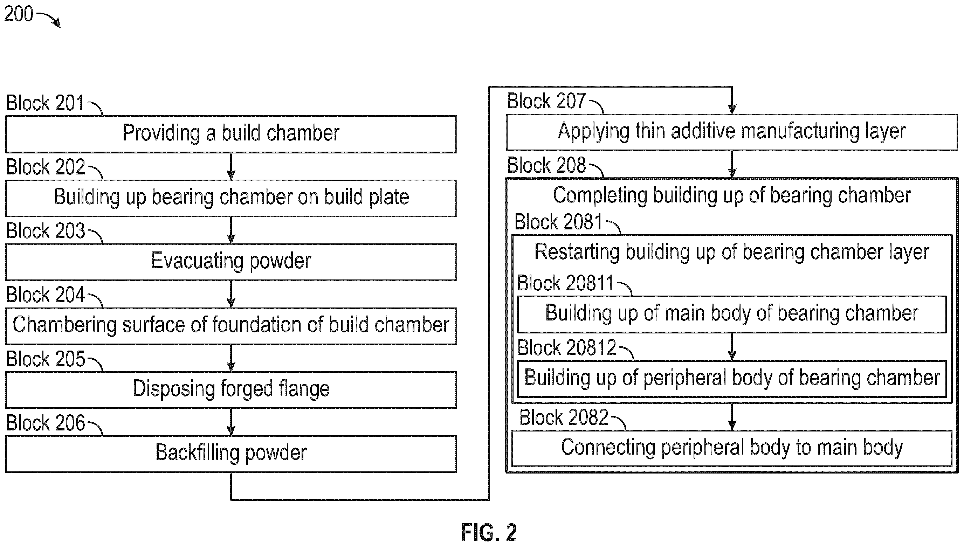

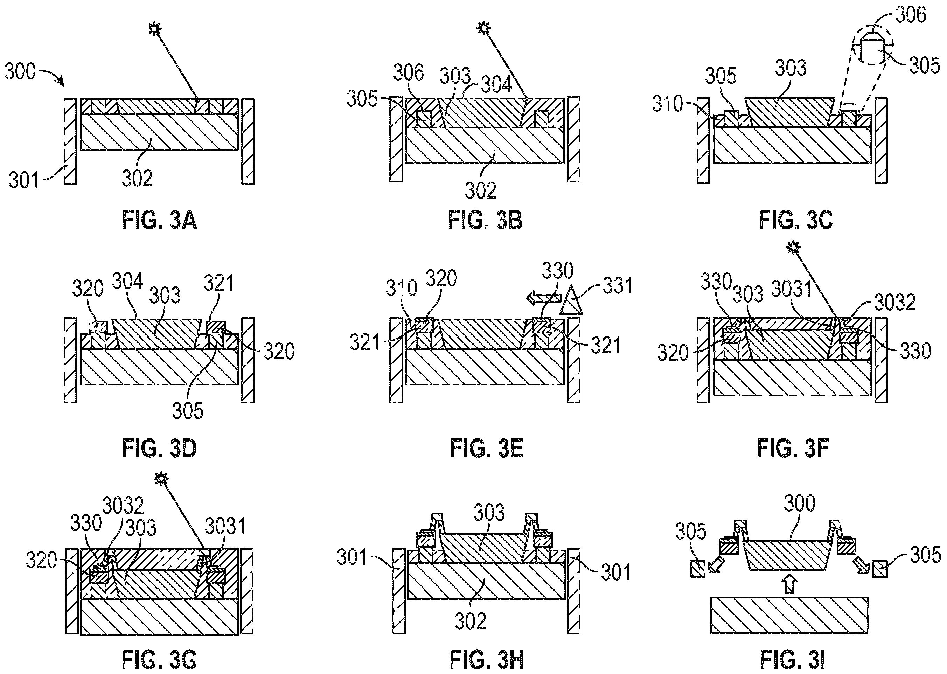

With reference to FIGS. 2 and FIGS. 3A-3I, a method 200 of additive manufacturing of a component, such as a bearing chamber of a gas turbine engine, is provided.

As shown in FIG. 2, the method 200 initially includes providing a build chamber (block 201) including sidewalls and a build plate movably disposed within the sidewalls. The method 200 further includes building up, on the build plate, the component (hereinafter referred to as a "bearing chamber" for purposes of clarity and brevity) to have a first uppermost layer and building up a foundation to have a second uppermost layer, which is defined below the first uppermost layer, relative to the build plate (block 202). In addition, the method 200 includes evacuating powder from around the bearing chamber and the foundation to expose the second uppermost layer (block 203) and disposing, on the second uppermost layer, a forged flange having an upper surface coplanar with the first uppermost layer (block 204) by, e.g., mechanical attachment of the forged flange to the second uppermost layer.

The method 200 can also include chamfering the second uppermost layer prior to the disposing of the forged flange (block 205). This insures that, even if or when the forged flange thermally expands or contracts during the build up processes, the resulting shape of a lower surface of the forged flange will be flat.

Continuing, the method 200 includes backfilling powder about the bearing chamber and the forged flange (block 206), applying a thin additive manufacturing layer to the upper surface (block 207) and completing a building up of the bearing chamber by building up on the thin additive manufacturing layer (block 208). The thin additive manufacturing layer can have a thickness which is less than thicknesses of each other layer of the bearing chamber. In some cases, the thin additive manufacturing layer can have a thickness of about 20 microns. The completing of the building up of the bearing chamber of block 207 can include restarting the building up of the bearing chamber (block 2081) by building up a main body of the bearing chamber (block 20811) and by building up a peripheral body of the bearing chamber on the thin additive manufacturing layer (block 20812). The completing of the building up of the bearing chamber of block 208 can further include connecting the peripheral body to the main body (block 2082).

In accordance with embodiments, the forged flange includes metallic material having substantially different properties of thermal expansion from materials of the bearing chamber and the thin layer.

As shown in FIGS. 3A and 3B, the method 200 initially includes providing a build chamber 300 including sidewalls 301 and a build plate 302 that is movably disposed within the sidewalls 301. On the build plate 302, the bearing chamber 303 (see FIG. 3I) is built up layer-by-layer in an additive manufacturing process, such as powder bed fusion, laser beam (PBF-LB) or another similar process, to have a first uppermost layer 304. A foundation 305 is similarly built on the build plate 302 to have a second uppermost layer 306. The second uppermost layer 306 is defined below the first uppermost layer 304 relative to the build plate 302. The build up of the bearing chamber continues until a predefined level or height of the first uppermost layer 304 is reached.

As shown in FIGS. 3C and 3D, the method 200 includes evacuating powder 310 from around the bearing chamber 303 and the foundation 305 to expose the second uppermost layer 306 and disposing, on the second uppermost layer 306, a forged flange 320. The forged flange 320 includes metallic material having substantially different properties of thermal expansion from materials of the bearing chamber and has an upper surface 321 that is coplanar or nearly coplanar with the first uppermost layer 304. The forged flange 320 can be mechanically attached to the second uppermost layer 306. As is also shown in FIG. 3C, the second uppermost layer 306 can be chamfered. This insures that, even if or when the forged flange 320 thermally expands or contracts during the build up processes, the resulting shape of a lower surface of the forged flange 320 will be flat.

As shown in FIGS. 3E and 3F, the method 200 includes backfilling powder 310 about the bearing chamber 303 and the forged flange 320 and applying a thin additive manufacturing layer 330 to at least the upper surface 321. The thin additive manufacturing layer 330 can be laid down by recoater 331 and can have a thickness which is less than thicknesses of each other layer of the bearing chamber 303. In some cases, the thin additive manufacturing layer 330 can have a thickness of about 20 microns (each other layer of the bearing chamber 303 can have a thickness of about 40 microns). The thinness of the thin additive manufacturing layer 330 serves to avoid thermally stressing the forged flange 320.

As shown in FIGS. 3F, 3G and 3H, the building up of the bearing chamber 303 is completed on at least the thin additive manufacturing layer 330. The completing of the building up of the bearing chamber 303 can include restarting the building and building up a main body 3031 of the bearing chamber 303 and by building up a peripheral body 3032 of the bearing chamber 303 on the thin additive manufacturing layer 330 until the peripheral body 3032 connects to the main body 3031.

As shown in FIGS. 3H and 3I, once the bearing chamber 303 is completed, it can be removed from the build chamber 300. This is done by lifting the build plate 302 upwardly relative to the sidewalls 301, removing the bearing chamber 303 off of the build plate 302 by wire EDM or bandsaw and mechanically disconnecting the foundation 305 from the build plate 302.

The result of the build up of the bearing chamber 303 is an additively manufactured component/bearing chamber 303 that includes the main body 3031 built up of layers of additive manufacturing material, a forged flange 320 formed of material having substantially different properties of thermal expansion from the additive manufacturing material and having a substantially flat lower surface 322, the thin additive manufacturing layer 330 applied to at least the upper surface 321 of the forged flange 320 and the peripheral body 3032 built up of layers of the additive manufacturing material from the thin additive manufacturing layer 330 to connect with the main body.

Benefits of the features described herein are the provision of a bearing chamber with a hybrid forged flange that can be additively manufactured.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of additive manufacturing of a component (303), the method comprising:
building up the component (303) to have a first uppermost layer (304) and a foundation (305) to have a second uppermost layer (306) below the first uppermost layer (304);
evacuating powder (310) from around the component (303) and the foundation (305) to expose the second uppermost layer (306);
disposing, on the second uppermost layer (306), a forged flange (320) having an upper surface (321) coplanar with the first uppermost layer (304);
backfilling powder (310) about the component (303) and the forged flange (320);
applying a thin additive manufacturing layer (330) to the upper surface (321); and
completing a building up of the component (303) by building up on the thin additive manufacturing layer (330).

2. The method according to claim 1, wherein the component (303) comprises a bearing chamber (303) of a gas turbine engine (20).

3. The method according to claim 1 or 2, wherein the forged flange (320) comprises metallic material having substantially different properties of thermal expansion from materials of the component (303) and the thin layer (330).

4. The method according to claim 1, 2 or 3, wherein the thin additive manufacturing layer (330) has a thickness which is less than thicknesses of each other layer (304, 306) of the component (303), and/or wherein the thin additive manufacturing layer (330) has a thickness of about 20 microns.

5. The method according to any preceding claim, wherein the completing of the building up of the component (303) comprises:
restarting the building up of the component (303), comprising:
building up a main body (3031) of the component (303); and
building up a peripheral body (3032) of the component (303) on the thin additive manufacturing layer (330); and
connecting the peripheral body (3032) to the main body (3031).

6. A method of additive manufacturing of a bearing chamber (303) of a gas turbine engine (20), the method comprising:
building up a main body (3031) of the bearing chamber (303), to have a first uppermost layer (304) and a foundation (305) to have a second uppermost layer (306) below the first uppermost layer (304);
evacuating powder from around the main body (3031) and the foundation (305) to expose the second uppermost layer (306);
disposing, on the second uppermost layer (306), a forged flange (320) having an upper surface (321) coplanar with the first uppermost layer (304);
backfilling powder (310) about the main body (3031) and the forged flange (320);
applying a thin additive manufacturing layer (330) to the upper surface (321); and
completing the bearing chamber (303) by continuing to build up the main body (3031), building up a peripheral body (3032) of the bearing chamber (303) on the thin additive manufacturing layer (330) and connecting the peripheral body (3032) to the main body (3031).

7. The method according to claim 6, wherein the forged flange (320) comprises metallic material having substantially different properties of thermal expansion from materials of the main body (3031) and the peripheral body (3032) and the thin additive manufacturing layer (330).

8. The method according to claim 6 or 7, wherein the thin additive manufacturing layer (330) has a thickness which is less than thicknesses of each other layer (304, 306) of the main body (3031) and the peripheral body (3032), and/or wherein the thin additive manufacturing layer (330) has a thickness of about 20 microns.

9. The method according to any preceding claim, further comprising chamfering the second uppermost layer (306) prior to the disposing of the forged flange (320) thereon.

10. The method according to any preceding claim, wherein the disposing of the forged flange (320) on the second uppermost layer (306) comprises mechanically attaching the forged flange (320) to the second uppermost layer (305).

11. An additively manufactured and hybridized component (303), comprising:
a main body (3031) built up of layers (304, 306) of additive manufacturing material;
a forged flange (320) formed of material having substantially different properties of thermal expansion from the additive manufacturing material;
a thin layer (330) of the additive manufacturing material applied to at least an uppermost surface (321) of the forged flange (320); and
a peripheral body (3032) built up of layers of the additive manufacturing material from the thin layer (330) of the additive manufacturing material to connect with the main body (3031).

12. The additively manufactured and hybridized component according to claim 11, wherein the thin layer (330) of the additive manufacturing material has a thickness which is less than thicknesses of each of the layers (304, 306) of the main body (3031) and each of the layers of the peripheral body (3032).

13. The additively manufactured and hybridized component according to claim 11 or 12, wherein the thin layer (330) has a thickness of about 20 microns.

14. The additively manufactured and hybridized component according to claim 11, 12 or 13, wherein the component (303) comprises a bearing chamber (303) of a gas turbine engine (20).

15. The additively manufactured and hybridized component according to any of claims 11 to 14, wherein the forged flange (320) comprises metallic material having the substantially different properties of thermal expansion from the additive manufacturing material, and/or wherein a lower surface (322) of the forged flange (320) is substantially flat.
